# EUROPEAN PATENT APPLICATION

(11) **EP 2 620 681 A1**
(43) Date of publication of application: **31.07.2013**
(21) Application number: 12305102.1
(22) Date of filing: 26.01.2012
(51) Int. Cl.: F16K 99/00

(54) **A fluidic valve unit**

(71) Applicant: Alcatel Lucent, 75007 Paris (FR)
(72) Inventor: Daly, John, Blanchardstown, Dublin 15 (IE); Jeffers, Nicholas, Blanchardstown, Dublin 15 (IE)
(74) Representative: Shamsaei Far, Hassan

(57) **Abstract**

A valve unit (1) comprises a substrate (11). The substrate (11) comprises at least one channel (12), a fluid (13) and a heating element (14) located at a nucleation site (15) abutting the channel (12). The channel (12) is configured to allow flow of the fluid (13) within the channel (12), and the heating element (14) is configured to provide heat to said channel (12) at said nucleation site (15). By thermally activating the heating element (14) the fluid undergoes nucleation at said nucleation site (15).

## Description

The present invention relates to fluidic components. One particular application of the invention is related to microfluidic components.

### BACKGROUND ART

Microfluidics is a known technology related to the behavior, control and manipulation of fluids of small size with a scale typically under millimeter range. Accordingly, a microfluidic device may typically relate to a device that has one or more fluid channels (microfluidic channel) with at least one dimension less than 1 mm.

Microfluidic channels may be used for providing thermal control in integrated circuit devices, in particular photonic devices such as photonic integrated circuits. Therefore, the ability to control microfluidic channels may allow for dynamic control of the thermal (and in case of photonic devices, the optical parameters of such photonics device.

### SUMMARY

Throughout the present disclosure, reference is made to microfluidic components only as a preferable implementation of the invention. However, the invention may equally be applicable to fluidic components, namely components that have one or more fluid channels with at least one dimension not less than 1 mm, as long as the technical solution provided in the present disclosure is applicable to such components.

Furthermore, in the flowing description reference is made to photonic devices by way of example. The invention however is not limited only to applications in the photonics domain but also is applicable in other fluidic and microfluidic systems such as for example integrated circuits, biosystems, lab-on-chip designs and devices, as well as a standalone valve assembly unit.

Some known techniques for providing control of the above-mentioned parameters use a localized control of the microfluidic channels within the wafer substrate (*e.g.* Silicon) of the photonic device.

In particular one such known solution relates to the use of liquids for bulk cooling wherein further thermal control is typically predetermined through the design process of the channel network and localized heater elements are typically added on the source components.

Another method of performing the microfluidic flow control within each microchannel network is through the use of macro scale mechanical valves, and typically complex microfluidic network design - which in practicality may result in a small number of microchannels actually being thermally controlled and the resulting infrastructure having pre-assigned operational points. However, these solutions typically do not provide the ability to dynamically control each localized heat source or thermally sensitive area.

However, the inventors are not aware of any commercial solution presently available which is capable of providing in-channel fluidic or microfluidic flow control.

Embodiments of the disclosure relate to the use of nucleation of a fluid within a channel to cause a restriction or blockage of the flow of the fluid in a fluidic or microfluidic channel. Preferably such restriction or blockage process involves a controlled formation of vapor within said channel.

The invention has applications not only in photonics domain but also in other fluidic or microfluidic systems such as for example integrated circuits, biosystems, lab-on-chip designs and devices, as well as a standalone valve assembly unit.

Accordingly some embodiments feature a valve unit comprising a substrate, the substrate comprising at least one channel comprising a nucleation site and a fluid, the channel being configured to allow flow of the fluid within the channel, the valve unit further comprising a heating element located at the nucleation site, the heating element being configured to transmit heat to said nucleation site, wherein the fluid is configured to undergo nucleation at said nucleation site in response to a thermal activation of the heating element.

According to some specific embodiments the channel and the heating element are comprised in a same substrate.

According to some specific embodiments channel and the heating element are comprised in different substrates.

According to some specific embodiments, the channel is a microfluidic channel. According to some specific embodiments, the heating element is configured to be adjustably energized thereby producing controllable nucleation at said nucleation site.

According to some specific embodiments, the heating element is configured to be energized by means of pulses.

According to some specific embodiments, the heating element is configured to provide different amounts of heat at different localized points at the nucleation site.

According to some specific embodiments, the heating element comprises conductive wires capable of heating up in response to electrical energy applied thereto.

According to some specific embodiments, at the nucleation site, or at a vicinity thereof, the channel adopts a geometric shape which is different from the shape of the channel at the sides of the nucleation site.

According to some specific embodiments, said geometrical shape is substantially spherical.

According to some specific embodiments, said geometrical shape comprises a step-wise cross-section.

According to some specific embodiments, the heating element is in physical contact with the channel.

According to some specific embodiments, the heating element is in physical contact with the fluid.

Some embodiments feature an integrated circuit device comprising the valve unit as featured herein.

According to some specific embodiments, the integrated circuit device is a photonic integrated circuit

These and further features and advantages of the present invention are described in more detail, for the purpose of illustration and not limitation, in the following description as well as in the claims with the aid of the accompanying drawings.

### BRIEF DESCRIPTION OF THE DRAWINGS

Figure 1 a is an exemplary schematic representation of a valve unit and a heat source, with the valve unit being in open state; and figure 1 b is an exemplary schematic representation of the valve unit and the heat source, with the valve unit being in closed state.
Figure 2 is and exemplary schematic representation of a device comprising a first channel associated to a valve unit and a second channel without a valve unit.

### DETAILED DESCRIPTION OF ILLUSTRATIVE EMBODIMENTS

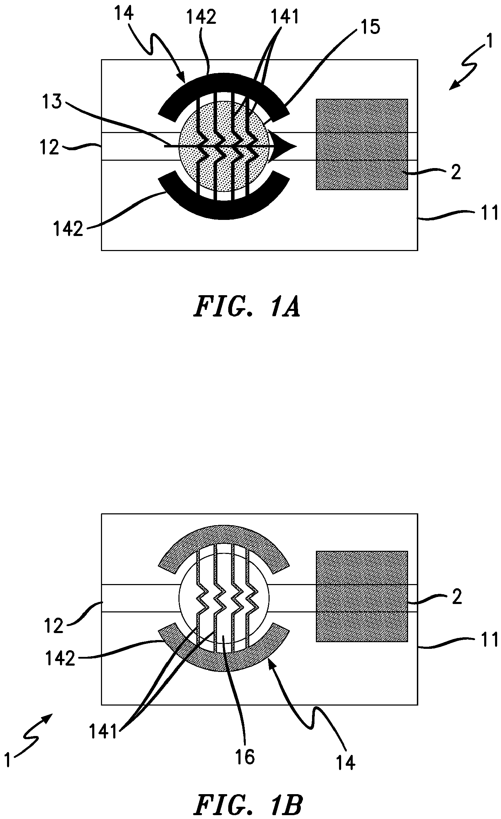

Figure 1 a shows an example of a valve unit 1 and a heat source 2 where the valve unit 1 is in open state where flow of a fluid is allowed in the channel towards a heat source 2. The valve unit 1 comprises a substrate 11 of any suitable material, such as for example silicon, silica, PMMA, PDMS, polymer, PTFE, PC, PTFE, ceramic which are known materials in the related art. One or more channels 12 are provided over the surface, or within, the substrate 11. Such channels 12 are preferably microfluidic channels, namely the channels have cross sections of about or below 1 mm in average. The valve unit 1 further comprises a fluid. The fluid may be of any suitable material such as for example water, alcohol, or dielectric fluid and is capable of flowing inside the channel 12 towards other components of the device in which the valve unit is incorporated, for example a heat source 2. The fluid is schematically shown in figure 1 a by means of arrow 13. The valve unit 1 further comprises a heating element 14. The heating element may be of any suitable material and type. For example the heating element may comprise conductive wires which heat up when electrical energy is applied thereto.

In some embodiments, the heating element 14 is located at a site 15 abutting the channel. Such site is herein also referred to as nucleation site.

By the term abutting it is meant to refer to a position in which the heating element 14 is in physical contact with the channel 12 at said site 15 such that direct thermal transfer from the heating element 14 to the channel 12 is made possible. In other embodiments the heating element 14 is in physical contact with the fluid 13 within the channel 12 at said site 15 such that direct thermal transfer from the heating element 14 to the fluid 13 is made possible.

The heating element may comprise components for providing heating functionality. In the example of Figure 1a, the heating element 14 is shown to comprise electric wires 141 which are configured to be heated up by means of electrical energy which may be applied on respective electric terminals 142 of the heating element 14 thus energizing the wires 141. However, as mentioned above, other suitable heating mechanisms may also be used.

Preferably at the nucleation site 15, or at a vicinity thereof, the channel 12 adopts a geometric shape which may be different than the shape of the channel at the sides of the nucleation site. For example, at nucleation site 15 in the example of figure 1, the channel 12 is shown to have a round, generally spherical shape. Such particular geometric shapes may allow for a formation of a desired volume of vapor when nucleation occurs as will be described in relation to figure 1 b.

In the example of figure 1a, the heating element 14 is not energized. Therefore, the fluid 13 may flow inside the channel 12 and reach the heat source 2. The heat source 2 may be any component of the overall device which requires to be temperature controlled, for example due to a normal operation of the device causing power consumption and consequently the generation of heat. The heat source 2 is preferably located at a position nearby or abutting the channel 12. As the fluid 13 is allowed to flow inside the channel 12 and adjacent to the heat source 2, thermal transfer occurs (*e.g.* by conduction to the walls of the channel 12 and then by convection into the fluid) between the heat source 2 and the fluid 13. Therefore in case the temperature in heat source 2 increases, the transfer of heat from the heat source 2 to the fluid 13 causes a reduction in temperature of the heat source 2.

Figure 1 b shows an example of the valve unit 1 of figure 1 a, however in closed state where flow of the fluid is restricted or blocked from reaching the heat source 2. In this figure, unless otherwise indicated, like elements have like reference numerals as those of figure 1 a.

In the example of figure 1 b, the heating element is energized - by known means - thereby causing the electric wires 141 to heat the fluid 13 present in the channel 12 at site15. As a result of such heating the fluid undergoes nucleation.

In brief terms, nucleation within the context of the present disclosure is to be understood as a localized action on a fluid causing a change in the thermodynamic phase of the fluid. Some examples of changes in phases are the conversion of a liquid into a gas (*e.g.* vapor) or into a solid (*e.g.* crystal).

Fluidic or microfluidic valve units within the context of the present disclosure therefore use fluids which are configured to change from one thermodynamic phase into another. For this reason such valve units may be identified as two-phase valves.

In the example of figure 1 b, the nucleation of the fluid 13 at, or close to the nucleation site 15, gives rise to a change in phase of the fluid 13 thereby causing the generation of a gas vapor 16, for example in the form of a bubble as a result of boiling of the fluid 13. The generation of a plug of vapor 16 in the channel 12 causes an increase in pressure within the channel 12 at, or close to, the nucleation site 15. This increase in pressure may retard or even block the flow of the fluid 13 within the channel 12 thereby producing the effect of a valve in closed position. As a consequence of blocking or retarding the flow of the fluid, the heat source 2 will no longer be able to transfer heat to a flowing (thus cooler) fluid 13 in order to cool off.

In this manner, by opening or closing the valve unit 1, the temperature at the heat source 2 may be controlled or adjusted.

The channel 12 may be made on the substrate by known methods. In some exemplary embodiments a silicon microchannel may be etched on the silicon wafer and the bonding top surface of the channel may have a heating element 14 with wires 141 traced across the microchannel, as shown in figures 1 a and 1 b.

In some embodiments the valve unit may be manufactured using a single substrate comprising the channel and the heating element. This can be achieved using known methods such as molding or extrusion.

Alternatively, in some embodiments, the valve unit may be manufactured using a substrate comprising the channel and a different substrate comprising the heating element. This may be achieved by known wafer processing techniques with a conductive material deposited on one wafer to generate a localized heating source. This wafer is then flip-chipped for alignment in order to cover a channel made on a different substrate and bonding the overall structure, thereby generating a valve in-situ within the channel. For example a silica wafer may be used to generate the heating element and silicon wafer may be used to make the channel and the heat source.

The heating element 14 (in particular the wires 141 in the present example) may be configured to perform two functions. One such function relates to the supply of a localized heating effect as described above. Another function relates to the possibility of providing a controllable nucleation site 15 for the generation and growth of the gas vapor (*e.g.* bubble). In this regard, by appropriately adjusting the energy applied to the heating element 14 (for example electric current injected into the electric wires 141), the temperature of the heating element 14 may be varied causing changes in the physical status - for example the size - of the generated gas vapor. Controlling the size of the gas vapor 16 allows for regulating the flow intensity of the fluid 13 in the channel 12. Therefore, a larger bubble formed in the nucleation site would give rise to a higher level of blockage of the flow of the fluid inside the channel which in turn allows for less heat transfer from the heat source 2 to the fluid 13 as compared to a smaller bubble formed in the nucleation site which would give rise to a lower level of blockage of the flow of the fluid inside the channel which in turn allows for higher heat transfer from the heat source 2 to the fluid 13.

Consequently, by controlling the localized power input to the nucleation sites the vapor growth in the valve is regulated. The resulting vapor growth can be used to regulate the flow in the channel between stationary to full flow. Thus the temperature removal by the fluid flowing inside the channel is controlled allowing for temperature regulation of the heat sources.

In other embodiments the localized power input to the heating element may be in the form of pulses. By varying the frequency (and/or amplitude) of the pulses, the rate of the power applied to the heating element varies. This variable rate in the power may in turn allow for the generation of variable rates for the growth of the gas vapor in the nucleation site of the valve unit. Therefore variation in frequency (and/or amplitude) of the pulses may allow for a variable flow rate in the channel. In yet other embodiments further geometrical features for the generation, growth and the capture of the gas vapor may be employed. The capture in this context is to be understood to relate to the wettability of the surface as regards the level of attraction of the surface to the fluid flowing therein (for example a hydrophobic surface is less attracted to the water and or hydrophilic is more attracted to the water).

Some embodiments may include a structure with step-wise changes in the cross section of the channel. A step-wise structure may provide mechanical stability to a wide range of gas vapor sizes and hence provide for a more refined flow control within the valve. In such a configuration, the size of the gas vapor may be varied in accordance with the various cross-sections of the channels thereby allowing for an adjustment of the blockage imposed on the flow of the fluid. This configuration may preferably be complemented by appropriate surface treatment techniques such that different localized points at the nucleation site may be subject to different amounts of heat provided by the heating element at such points. For example the heating element may be configured to provide more heat to a part of the channel with a higher cross-section as compared to heat provided to another part with a smaller cross-section.

Furthermore, the heating element may have different nucleation site properties depending on the geometry of application.

Further surface treatments techniques include the use of hydrophobic or hydrophilic structures within the channel for better control of the gas vapor phase. These structures may include a surface coating, raised pillars or pitted troughs, or localized shape structures which are known in the related art.

It is to be noted that although surface treatment techniques may be used as a preferred option with respect to the step-wise configuration of the nucleation site, such techniques are not limited for use only with respect to the latter configuration and may also be used in conjunction with other possible configurations of the nucleation sites as long as such use is compatible with such configurations.

In other embodiments a network of fluidic or microfluidic valves located at multiple localized points of the fluid direction may be combined to control the direction of flow of the fluid, the local heat dissipation rate and the temperature of the device. Such network may be made within a photonic device or package to dynamically control the thermal parameters required, i.e. both heat dissipation and temperature control.

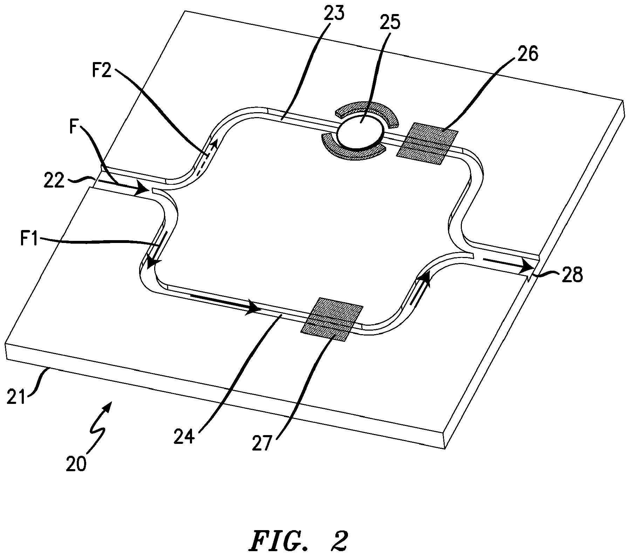

Figure 2 is an exemplary schematic representation of a device wherein a combined structure, with a first channel associated to a valve unit and a second channel is without a valve unit is shown. The device 20 may be, for example, a photonic integrated circuit. The device comprises a substrate 21 over which a channel 22 is made. A fluid, represented in the figure by arrow F may flow inside the channel 22. As shown in the figure, at a certain point in the device the channel 22 is split into two channels 23 and 24. Channel 23 is associated to a valve unit 25 whereas channel 24 is not associated to a valve unit. Both channels 23 and 24 are further associated to heat sources 26 and 27 respectively. At a location on the substrate 21 and downstream the valve unit 25, the channels 23 and 24 merge together to form another channel 28. The structure of the valve unit 25 is similar as the one described with respect to figures 1 a and 1 b.

In the example shown in figure 2, valve unit 25 is in closed position. Therefore the flow of fluid therein is blocked, or retarded as the case may be. In this situation, assuming that valve unit 25 is in a position to completely block the flow of the fluid through channel 23, the fluid F upon flowing inside the channel 22 and reaching the intersection between channels 23 and 24 is directed to flow through channel 24 as shown by means of arrow F1.

Conversely, when valve unit 25 is in a position to allow the flow of the fluid through channel 23 (i.e. open position), the fluid F upon flowing inside the channel 22 and reaching the intersection between channels 23 and 24 is directed to flow through both channels 23 and 24 as shown by means of arrows F1 and F2 (shown in broken line to highlight the fact that such flow may be blocked or allowed depending on the situation of the valve unit 2).

In this manner the fluid flow in both channels 23 and 24 may be controlled by a single valve (although channel 24 may always have some flow available, it is still possible to control the flow of the fluid therein). Therefore, heat sources 26 and 27 may receive controlled flow of fluid and thus may be thermally controlled as desired

By using a network of valve units on a device and combining their blockage/passage effect on the fluid, a large array of heat sources may be thermally controlled in a small form-factor. This also allows for improved thermal performance as with the use of valve units as described herein and appropriate combination thereof, the fluid path though the entire photonic module is controllable and assignable following assembly and optics characterization. Another advantage of the solution provided herein is significant flexibility for package integration. The use of the valve unit as disclosed herein allows for thermal control while at the same time involves lower cost, reduced profile, improved microfluidic design flexibility, lower power consumption and more localized control of a microfluidic system, as compared to conventional devices. The various embodiments of the present invention may be combined as long as such combination is compatible and/or complimentary.

Further it is to be noted that the list of structures corresponding to the claimed means is not exhaustive and that one skilled in the art understands that equivalent structures can be substituted for the recited structure without departing from the scope of the invention.

It is also to be noted that the order of the steps of the method of the invention as described and recited in the corresponding claims is not limited to the order as presented and described and may vary without departing from the scope of the invention.

It should be appreciated by those skilled in the art that any block diagrams herein represent conceptual views of illustrative circuitry embodying the principles of the invention.

## Claims

1. A valve unit comprising a substrate, the substrate comprising at least one channel comprising a nucleation site and a fluid, the channel being configured to allow flow of the fluid within the channel, the valve unit further comprising a heating element located at the nucleation site, the heating element being configured to transmit heat to said nucleation site, wherein the fluid is configured to undergo nucleation at said nucleation site in response to a thermal activation of the heating element.

2. The valve unit of claim 1 wherein the channel and the heating element are comprised in a same substrate.

3. The valve unit of claim 1 wherein the channel and the heating element are comprised in different substrates.

4. The valve unit of any one of the preceding claims, wherein the channel is a microfluidic channel.

5. The valve unit of any one of the preceding claims, wherein the heating element is configured to be adjustably energized thereby producing controllable nucleation at said nucleation site.

6. The valve unit of any one of the preceding claims, wherein the heating element is configured to be energized by means of pulses.

7. The valve unit of any one of the preceding claims, wherein the heating element is configured to provide different amounts of heat at different localized points at the nucleation site.

8. The valve unit of any one of the preceding claims, wherein the heating element comprises conductive wires capable of heating up in response to electrical energy applied thereto.

9. The valve unit of any one of the preceding claims, wherein at the nucleation site, or at a vicinity thereof, the channel adopts a geometric shape which is different from the shape of the channel at the sides of the nucleation site.

10. The valve unit of claim 7, wherein said geometrical shape is substantially spherical.

11. The valve unit of claim 7, wherein said geometrical shape comprises a step-wise cross-section.

12. The valve unit of any one of the preceding claims wherein the heating element is in physical contact with the channel.

13. The valve unit of any one of the preceding claims wherein the heating element is in physical contact with the fluid.

14. An integrated circuit device comprising the valve unit of any one of the preceding claims 1 to 11.

15. The integrated circuit of claim 12, wherein the integrated circuit device is a photonic integrated circuit.
